# EUROPEAN PATENT APPLICATION

(11) **EP 2 315 163 A1**
(43) Date of publication of application: **27.04.2011**
(21) Application number: 10179708.2
(22) Date of filing: 12.05.2005
(51) Int. Cl.: G06K 19/077, A01N 1/02, B01L 3/00

(54) **Identification of cryo-preserved samples**

(30) Priority: 12.05.2004 GB 0410587; 17.12.2004 GB 0427820
(62) Divisional of application: 05744142.0
(71) Applicant: Research Instruments Limited, Falmouth, Cornwall TR11 4TA (GB)
(72) Inventor: Lansdowne, David, Flushing, Cornwall TR11 5TP (GB)
(74) Representative: Ribeiro, James Michael

(57) **Abstract**

Apparatus (10) for identification of cryo-preserved samples (14) at cryogenic temperatures is disclosed, the apparatus comprising one or more vessels (13) for containing samples, each vessel being provided with a radio frequency identification (RFID) chip (15), means to activate the RFID chip and means to receive identifying signals from said RFID chips, the activation or signal-receiving means including an anti-collision protocol to enable the receiving means to discriminate between discrete vessels. Also disclosed is a method for identification, at cryogenic temperatures, of cryo-preserved samples contained in discrete vessels.

## Description

This invention relates to apparatus and a method for the identification of cryo-preserved samples.

Samples such as biological samples of tissue, blood or forensic samples are frequently cryogenically stored so as to preserve them. Cryogenic preservation is also widely used in the storage of *in vitro* fertilisation (IVF) samples such as embryos, oocytes, ovarian tissue, spermatozoa and testicular tissue.

In order to preserve such samples over a long period of time and without a reduction in viability, the samples need to be stored at temperatures below -135°C. Freezers can run at temperatures as low as -130°C but for optimum storage times without loss of viability the samples are ideally stored at the temperature of liquid nitrogen (-196°C).

For preservation purposes, the samples are suspended in hypertonic solutions which may include cryo-protective additives and stored within small vessels such as vials or, preferably, straws, or in larger vessels such as flexible plastics bags held within a protective container, especially for blood storage. The vessels are immersed in liquid nitrogen within a container; the containers are then placed in cooling receptacles. Once immersed in the liquid nitrogen the samples become frozen until they are removed and allowed to thaw. The freezing of the samples at such low temperatures preserves the samples until they are required.

The straws or other vessels may also be positioned in the vapour immediately above liquid nitrogen within a container. However, very large temperature gradients within the vapour phase above liquid nitrogen can hinder the freezing of the sample. These gradients can also be made worse by the opening of the cooling receptacle for the transfer of sample.

It is necessary to be able to identify each vessel and the sample contained therein. For example, in the case of the preservation of oocytes, embryos or sperm, information such as the name of the patient and the number of samples obtained from that patient would be required. The most obvious way of identifying each sample is to mark the vessel with the required information or a particular code which relates to the required information. This can be done by simple number or letter codes or more complex bar codes which can be read with a scanner. However, these methods of identification require each vessel to be removed from the container and, therefore, from the liquid nitrogen. The removal of the vessels from the liquid nitrogen may cause the sample within to thaw and possibly decrease its viability. The vessels, especially in the form of straws which have a large surface area, a small diameter and a thin wall, experience very rapid warming when they are removed from liquid nitrogen and even removal for only a few seconds can cause a sample to thaw or at least to be subject to a temperature rise which threatens the viability. In addition, when removed from the liquid nitrogen, the vessels are usually covered with frost, so that the marks may be difficult to read or the bar codes difficult to scan.

It is therefore an object of the present invention to provide apparatus and a method for identifying cryo-preserved biological samples without the need to remove the samples from the liquid nitrogen and, therefore, to minimise any damage caused to the samples during preservation.

In one aspect the invention provides apparatus for identification of cryo-preserved samples at cryogenic temperatures, the apparatus comprising one or more vessels for containing samples, each vessel being provided with a radio frequency identification (RFID) chip, means to activate the RFID chip and means to receive identifying signals from said RFID chips, the activation or signal-recieving means including an anti-collision protocol to enable the receiving means to discriminate between discrete vessels.

The apparatus may include containers into which the vessels are inserted for storage and which, incorporate the activation/receiving means. Within the containers a cooling fluid may be contained, the cooling fluid being preferably liquid nitrogen.

In use, the identification apparatus can perform inventory checks of many samples within a few seconds. There is no requirement for the vessels containing the samples to be removed from the liquid nitrogen within the container in order to carry out the inventory and, therefore, the possibility that the samples may be subjected to temperatures that may cause thawing and reduce the viability of the sample is greatly reduced.

The apparatus can also be used to locate a specific sample, also without the need for the removal of other vessels from the liquid nitrogen and, therefore, without exposing the other vessels to a rise in temperature.

The chips are preferably activated by radiation in the form of radio frequency waves. The radiation is preferably of low frequency, approximately in the range 100-150 kHz, for example, 125 kHz. The advantage of using a low frequency radiation is that, should any radiation be adsorbed by the sample, the radiation would not cause a significant rise in the temperature of the samples with possible thawing as a result thereof.

Preferably the means to activate and/or receive identifying signals from the RFID chips comprises an antenna capable of being positioned in operative proximity to said RFID chips. The antenna may be essentially probe-like, to be placed in use in the central region of an array of sample-containing vessels or chips attached thereto, or may be shaped so as to penetrate, envelop or surround at least in part an array of vessels or chips. The antenna may include screening or shielding means to prevent other chips in the vicinity from being subject to activation. An electro-magnetic decoupling material may be applied around the antenna to direct radiation inwardly for screening or shielding purposes.

The vessels are preferably cryogenic straws which are formed from a material which can withstand temperatures as low as liquid nitrogen for long periods of time, such as glass or a plastics material. The straws may include hydrophobic plugs which seal the sample within the straw. The hydrophobic property of the plugs prevents any adsorption of the sample into the plug. Other suitable vessels, depending on the material to be stored, include vials and bloodbags.

The RFID chips are preferably cylindrical so as to fit within the vessels. In addition, the RFID chips are approximately less than 5 mm in diameter. As known in the art, the chips may comprise a coil or pathway of electrically-conducting material wound on or applied to an inert substrate.

The apparatus may also include an interface to a computer system, such as a personal computer (PC) equipped with inventory management software or a database. The inventory management software is preferably compatible with existing databases.

In another aspect, the invention provides a method for identifying cryo-preserved samples contained in discrete vessels, the method comprising the steps of providing the vessels each with a radio frequency identification (RFID) chip, generating a radio frequency field in operative proximity to said RFID chips, receiving identifying signals from said chips and analysing said signals using an anti-collison protocol to discriminate between data from each vessel, in which the method is carried out at cryogenic temperatures.

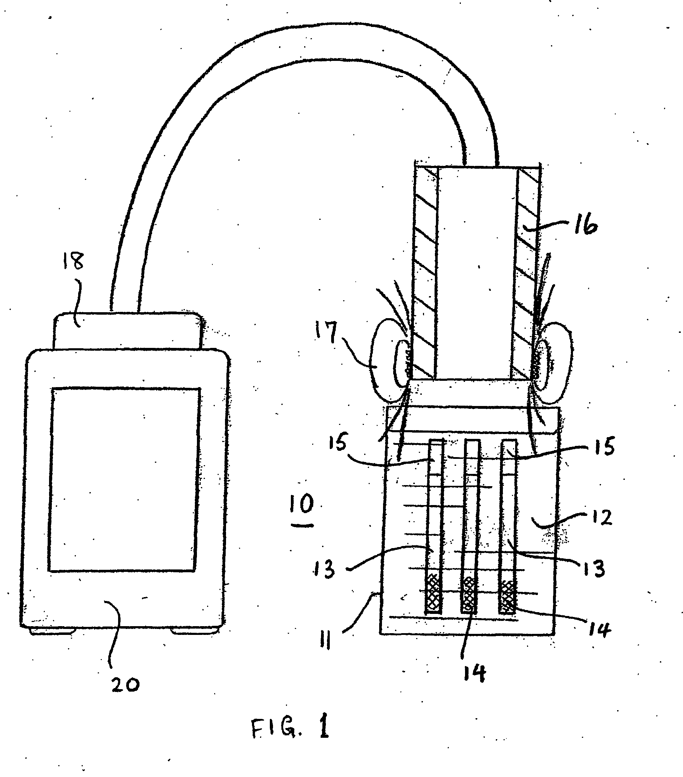

Embodiments of the invention will now be described by way of example with reference to the accompanying drawing showing apparatus according to the invention.

With reference to the drawing, the apparatus is shown generally at 10 and includes a container 11 holding liquid nitrogen 12. Cryogenic straws 13 are stored in the liquid nitrogen 12 within the container 11. The straws 13 each contain a biological sample 14 and have an RFID chip 15 inserted therein. The apparatus further includes an annular antenna 16 to transmit and receive radio frequency signals 17, a reader 18 to produce and process the radio signals and a personal digital assistant (PDA) 20 to identify the signals produced.

The presence of a metal object in proximity to the chip or tag causes the inductance of the circuit to fall, because the metal warps the magnetic field of the circuit, which is thus incapable of storing as much energy. This in turn causes a difference in the resonant frequency of the tag compared with the frequency of the signal transmitted by the antenna. To compensate for this, either the initial capacitance or inductance of the tag can be adjusted so that the tag is able to achieve resonance with the antenna and, thus, to communicate with the antenna. Additionally, by selecting a lower Q factor for the circuit, the range of resonant frequency can be increased.

The RFID chip 15 preferably operates at a frequency of 125 kHz, this being better than chips which operate at 13.56 MHz for use close to metal structures.

In one embodiment, the straws 13 are held in an open-frame aluminium tube holding up to twelve straws, up to twenty tubes being contained in a goblet and six goblets being held in the Dewar flask container 11. The chips 15 therefore require a sensitive anti-collision protocol such as provided by Answer on Request using polling with passwords.

In order to withstand liquid nitrogen temperatures, the electronic components are preferably encased in a plastics material, rather than more conventional silicon-based materials. Representative suitable plastics materials include polycarbonates, ptfe, polyolefins, especially polypropylene, and acrylonitrile-butadiene-styrene copolymers. The components may alternatively be encased or encapsulated in a vitreous material, for example glass, optionally reinforced with an epoxy resin compound. The preferred capacitors for the chips, for consistency of performance at extremely low temperatures, have polymer dielectrics with a low to medium dielectric constant. Similarly, resistors are preferably of the thin-film or metal-film type, such as of the Ni-Cr, Ta₂N/Ta-N and Cr-Si type. Semiconductor devices are preferably of the CMOS type, although NMOS and bipolar types also perform adequately. The chip density is also important, gate lengths of at least 95 nm being preferred, more preferably greater than 100 nm. A suitable chip which may be used is identified as e-5557.

In use, biological samples 14, such as embryos, are removed from a patient and placed into cryogenic straws 13 for storage. The straws are then frozen in a controlled manner and placed in a container 11 which holds liquid nitrogen 12. The liquid nitrogen 12 causes the temperature of the biological samples 14 to reduce to cryogenic levels and the samples are therefore preserved until required by the patient. Before storage, each straw 13 containing a sample 14 is fitted with an RFID chip 15. The RFID chip may be programmed with information relating to the sample, such as the patient details. It is essential carefully to monitor the storage of such biological samples and an inventory which relates samples to their storage containers is necessary. In order to create or interrogate such an inventory, an antenna 16 is positioned just above the container 11 and in close proximity around the RFID chips 15 fitted in the straws 13. The antenna transmits a radio frequency field 17 which is produced by the reader 18. The RFID chips 15 are activated by the radio frequency field and produce identifying signals which are picked up by the antenna 16 and transferred to the reader 18. The signals are translated into information relating to the samples; the information is displayed on the screen of the PDA 20. The information can be displayed in the form of an inventory or audit report and stored on a database which can identify the container holding particular samples, and the samples held in each container.

Another use for the apparatus 10 is to locate a specific sample 14 to be removed from the container 11. The apparatus 10 is used as described above to identify by its container the location of a particular straw 13 containing a particular sample 14. Once the identifying signals have been translated into the relevant information and the location of a particular straw 13 has been determined, a user can remove the straw from the container 11. The reader checks that the correct straw has been removed and the database can then be updated with details concerning the removal of the straw.

## Claims

1. Apparatus for identification of cryo-preserved samples at cryogenic temperatures, the apparatus comprising an array of vessels for containing samples, each vessel being provided with a radio frequency identification (RFID) chip, means to activate the RFID chip and means to receive identifying signals from said RFID chips, the activation or signal-receiving means including an anti-collision protocol to enable the receiving means to discriminate between discrete vessels, wherein the means to activate and/or receive identifying signals from the RFID chips comprises an antenna capable in use of being positioned in operative proximity to said RFID chips, **characterised in that** the antenna is shaped so as to envelope or surround at least in part the array of vessels, and **in that** the antenna includes screening or shielding means.

2. Apparatus according to claim 1, further including containers into which the vessels are inserted for storage and which incorporate the activation/receiving means.

3. Apparatus according to claim 1 or claim 2, in which the chip activation means generates low frequency radio waves.

4. Apparatus according to claim 3, in which the chip activation means generates low frequency radio waves in the range 100-150 kHz.

5. Apparatus according to any preceding claim, in which the screening or shielding means comprises an electro-magnetic decoupling material which is applied around the antenna to direct radiation inwardly for screening or shielding purposes.

6. Apparatus according to any preceding claim, in which the antenna is an annular antenna.

7. Apparatus according to any preceding claim, in which the vessels comprise cryogenic straws, vials or bloodbags.

8. Apparatus according to any preceding claim, in which the RFID chips are cylindrical and are approximately 5 mm or less in diameter.

9. Apparatus according to any preceding claim, in which the chip includes a capacitor having a polymer dielectric with a low to medium dielectric constant.

10. Apparatus according to any preceding claim, in which the chip includes a resistor of the thin-film or metal-film type.

11. Apparatus according to any preceding claim, in which the chip is of the CMOS, NMOS or bipolar type.

12. Apparatus according to any preceding claim, in which the chip has a gate length of at least 95 nm.

13. Apparatus according to any preceding claim, further including an interface to a computer system.

14. A method for identifying cryo-preserved samples contained in an array of discrete vessels, the method comprising the steps of providing the vessels each with a radio frequency identification (RFID) chip, generating a radio frequency field in operative proximity to said RFID chips with an antenna positioned in operative proximity to said RFID chips, receiving identifying signals from said chips with said antenna positioned in operative proximity to said RFID chips, and analysing said signals using an anti-collision protocol to discriminate between data from each vessel, in which the method is carried out at cryogenic temperatures, **characterised in that** the antenna is shaped so as to envelope or surround at least in part the array of vessels, and **in that** the antenna includes screening or shielding means.

15. A method according to claim 14 in which the radio frequency field has a frequency in the range 100-150 kHz.
